# EUROPEAN PATENT SPECIFICATION

(11) **EP 2 512 906 B1**
(45) Date of publication and mention of the grant of the patent: **19.06.2019**
(21) Application number: 10837975.1
(22) Date of filing: 10.12.2010
(51) Int. Cl.: B62D 53/08, B60W 30/045, B62D 47/02, B60T 8/1755, B62D 53/00, B60W 30/02

(54) **DRIVER ASSISTANCE**
FAHRHILFE
ASSISTANCE AU CONDUCTEUR

(30) Priority: 15.12.2009 SE 0950960
(43) Date of publication of application: 24.10.2012
(73) Proprietor: Scania CV AB, 151 87 Södertälje (SE)
(72) Inventor: ROBERTSSON, Oscar, SE-115 43 Stockholm (SE); LAANEN, Frederik, SE-151 46 Södertälje (SE)
(74) Representative: Scania CV AB
(86) International application number: PCT/SE2010/051359
(87) International publication number: WO 2011/075047

(56) References cited:
- EP-A2- 1 283 149
- WO-A1-2008/073045
- DE-A1- 2 919 831
- DE-A1- 3 615 071
- US-A- 4 763 916
- US-A1- 2004 232 652
- US-A1- 2006 033 308
- US-A1- 2006 206 253
- US-A1- 2007 260 387

## Description

### BACKGROUND TO THE INVENTION AND PRIOR ART

The present invention relates generally to automatic driver assistance with regard to driving of motor vehicles. In particular, the invention relates to a system according to the preamble of claim 1 and a method according to the preamble of claim 6. The invention relates also to a computer programme according to claim 9 and a computer-readable medium according to claim 10.

The ever-increasing sophistication of commercial motor vehicles is accompanied by increasing demand for good driving characteristics. Drivers also expect vehicles to cope with relatively complicated driving situations without risk to the safety of road users or to mechanical functions of the vehicle. For mechanically advanced vehicles such as articulated buses, there may also be a challenging requirement to ensure appropriate behaviour in all driving situations.

There are known solutions for improving in various ways a motor vehicle's driving characteristics in certain problematic situations. For example, WO 2005/061295 describes a method whereby a vehicle's brake system is activated with respect to individual wheels in order to counter the vehicle's rolling tendencies. One or more brakes are then kept activated until an angle of inclination of the vehicle is below a predetermined threshold value.

US 4,688,818 refers to a method for stabilising of articulated vehicles with a hydraulic steering mechanism between the vehicle sections. A current steering angle or articulation angle is compared with recorded data concerning angle values which have been found to be compatible with stable operating states for the vehicle. When there is deviation from these data, action is taken, e.g. by changing the degree of damping in the control mechanism, with the object of restoring the vehicle to a stable operating state.

US 4,616,841 describes a control system for articulated buses in which two-way piston/cylinder units are used to damp and control relative angular movements between the front and rear sections of the vehicle. Specifically, a maximum articulation angle which is never allowed to be exceeded is defined for respective vehicle running speeds. This makes it possible, for example, to handle situations where the driver by panic reaction changes direction too sharply or too quickly.

WO 2008/073045 A1 discloses an articulated vehicle having a front vehicle body and a rear vehicle body, said front and rear vehicle bodies being arranged to be connected together by articulation means comprising first damping means and second damping means for providing relative rotation relative to each other. The vehicle further comprises a first and a second control unit comprising means for receiving sensor signals and means for controlling, respectively, said first and second damping means.

However, there is no entirely satisfactory solution for articulated vehicles which not only provides the driver with assistance in difficult driving situations but also protects the vehicle and its steerable articulation against breaking loads and other harmful mechanical stresses.

### SUMMARY OF THE INVENTION

The object of the present invention is therefore to propose a solution which solves the above problem and hence offers safe and stable handling of articulated motor vehicles across a broad range of driving occurrences and driving situations.

According to an aspect of the invention, the object is achieved by the system according to claim 1.

An important advantage achieved by the system here concerned is that it makes it possible to distinguish, with a relatively large degree of reliability, the situations where the driver needs assistance from other situations in which assistance is unnecessary and there is therefore no need for any handling-related action. Any incorrect application of assistance might actually have disastrous consequences by risking considerable impairment of the vehicle's handling.

According to an embodiment of this aspect of the invention, the calculation module is configured to derive said set-point values on the basis of a mathematical model for the vehicle combined with handling-related data for the specific vehicle. The set-point values can thus be determined with high precision and hence be given high relevance in the assessment of the respective driving situation.

According to another embodiment of this aspect of the invention, the signals on which the at least one handling-related magnitude is based comprise a steering angle for the vehicle, the vehicle's running speed and/or the magnitude of a damping of at least one element which is intended to influence the flexibility of the articulation between the front and rear vehicle sections. The result is an appropriate basis for appraising the driving situation.

According to the invention, the at least one handling-related form of action comprises: increasing a damping of at least one element which influences the flexibility of said articulation; decreasing a damping of at least one element which influences the flexibility of said articulation; braking at least one wheel of the vehicle; and/or limiting at least one torque delivered to the vehicle's powered wheels. These forms of action make it possible to effectively overcome the majority of problematic driving situations.

According to a further embodiment of this aspect of the invention, the evaluation module, the calculation module and/or the action module are implemented by software executed in at least one processor. It is preferable that two or all of the modules be implemented in a single processor, as this results in an effective configuration.

According to another aspect of the invention, the object is achieved by the method according to claim 6.

The advantages of this method and of its preferred embodiments are indicated by the above discussion with reference to the proposed system.

According to another aspect of the invention, the object is achieved by a computer programme according to claim 9.

According to a further aspect of the invention, the object is achieved by a computer-readable medium according to claim 10.

### BRIEF DESCRIPTION OF THE DRAWINGS

The present invention is explained below in more detail on the basis of embodiments described by way of examples and with reference to the attached drawings.
- Figures 1 a-b: respectively are side and top views of an articulated vehicle according to an embodiment of the invention,
- Figures 2a-c: are views of an articulated vehicle according to embodiments of the invention in which various handling-related parameters are illustrated,
- Figure 3: is a block diagram of a system according to an embodiment of the invention, and
- Figure 4: is a flowchart illustrating the general method according to the invention.

### DESCRIPTION OF EMBODIMENTS OF THE INVENTION

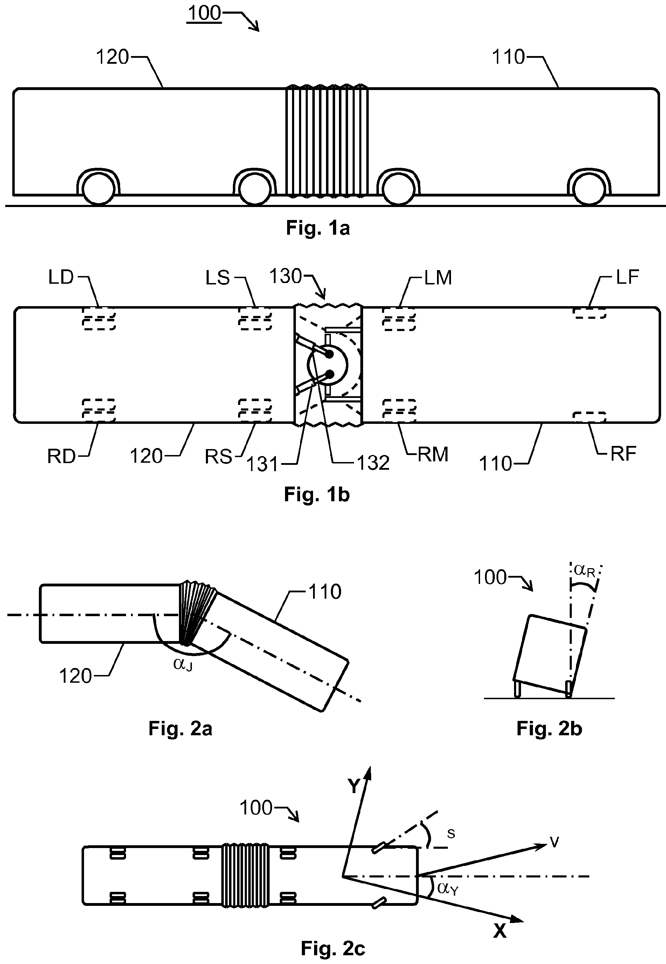

We refer initially to Figure 1a, which is a schematic side view of an articulated motor vehicle 100 according to an embodiment of the invention. Figure 1b is a corresponding top view of the vehicle 100. Figures 2a, 2b and 2c are views of the vehicle 100 according to embodiments of the invention which respectively illustrate various handling-related parameters α_{J}, α_{R}, and α_{S} and α_{Y}, for the vehicle 100.

The vehicle 100 comprises at least one forward vehicle section 110 and one rear vehicle section 120. The sections 110 and 120 are connected to one another via a steerable articulation 130 with an angle α_{J} whose rigidity (see Figure 2a) is adjustable via at least one element 131 and/or 132, e.g. a hydraulic piston arrangement.

Figure 1b shows that the vehicle 100 may be provided with quite a number of pairs of wheels, e.g. four pairs. A forward wheel pair comprises here a left front wheel LF and a right front wheel RF which can in a conventional way be angled to achieve a steering angle α_{S} relative to the chassis of the vehicle 100 (see Figure 2c). The forward vehicle section 110 has a rear wheel pair comprising a left middle wheel LM and a right middle wheel RM. The rear vehicle section 120 has a support wheel pair comprising a left support wheel LS and a right support wheel RS. According to the invention, however, the rear vehicle section may also have no support wheels. Typically the engine of the vehicle 100 is situated in the rear vehicle section 120, in which case it is also advantageous for the powered wheels LD and RD of the vehicle 100 to be situated in the rear vehicle section 120. The powered wheels are here represented by a left rear wheel LD and a right rear wheel RD. It is not excluded, however, that power may be applied on one or more of the wheel pairs LF/RF, LM/RM and/or LS/RS, particularly if the vehicle's engine is situated in the forward vehicle section 110. It is also possible that one or more of the wheel pairs LM/RM, LS/RS and/or LD/RD may be capable of being angled relative to the chassis to facilitate the steering of the vehicle 100.

Handling the vehicle 100 is regarded as involving a primary speed vector v. The direction of the vehicle 100 relative to an external reference system X, Y (e.g. a geographical coordinate system) is here called the yaw angle α_{Y} (see Figure 2c). Depending on the vehicle's orientation, the yaw angle α_{Y} may assume any value between 0° and 360°. During handling of the vehicle 100, a certain roll angle α_{R} also commonly occurs (see Figure 2b). The roll angle α_{R} represents a slope of the chassis of the vehicle 100 relative to the running surface on which the vehicle 100 is travelling.

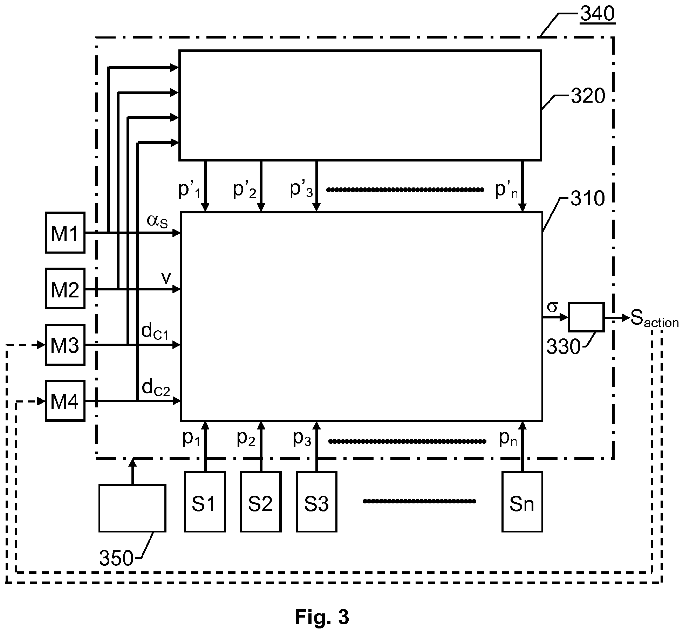

Figure 3 is a block diagram of a system according to an embodiment of the invention. The system comprises a set of sensors M1, M2, M3 and M4, an evaluation module 310, a calculation module 320 and an action module 330.

The sensors M1, M2, M3 and M4 are configured to repeatedly register signals which describe at least one handling-related magnitude for the vehicle 100, e.g. the steering angle α_{S}, the running speed v and/or a damping d_{C1} and d_{C2} of at least one element 131 and/or 132 which is intended to influence the flexibility of the articulation 130. The number and distribution of the sensors M1, M2, M3 and M4 in the vehicle 100 is preferably such that the respective signals are registered both in the forward vehicle section 110 and in the rear vehicle section 120. To this end it may be advantageous to use one or more combination sensors, i.e. sensors configured to simultaneously register two or more signals.

The calculation module 320 is configured to receive the signals α_{S}, v, d_{C1} and d_{C2} and to derive on the basis thereof respective set-point values p'₁, p'₂, p'₃, ..., p'ₙ for a set of parameters for the vehicle 100. The parameters may represent one or more of the following magnitudes: the articulation angle α_{J}, an articulation angle rate (i.e. the time derivative of α_{J}), the yaw angle α_{Y}, a yaw angle rate (i.e. the time derivative of α_{Y}), the roll angle α_{R}, a lateral acceleration, a rotation speed of the left front wheel LF, a rotation speed of the right front wheel RF, a rotation speed of the left middle wheel LM, a rotation speed of the right middle wheel RM, a rotation speed of the left support wheel LS, a rotation speed of the right support wheel RS, a rotation speed of the left powered wheel LD, a rotation speed of the right powered wheel RD, a vehicle running speed, current gear ratio and status for various extreme-position sensors.

The calculation module 320 is with advantage configured to derive the set-point values p'₁, p'₂, p'₃, ..., p'ₙ on the basis of a mathematical model for the vehicle 100 and by means of handling-related data for the specific vehicle. The mathematical model is a theoretical description of the vehicle's general behaviour and characteristics. Current axle spacing and centre-of-gravity position in the vehicle 100 are examples of data for the specific vehicle.

With the object of determining the running speed v of the vehicle 100 as accurately as possible, the calculation module 320 is with advantage configured to examine a number of different registered running speed signals and to carry out on the basis thereof a plausibility check on the data. This results in a robust function and makes it possible to detect any faulty sensors. After said plausibility check, a corrected running speed/the running speed information deemed most correct serves with advantage as input data to the mathematical model used in the calculation module 320.

The evaluation module 310 is configured to receive the signals α_{S}, v, d_{C1} and d_{C2} from the sensors M1, M2, M3 and M4. The evaluation module 310 is also configured to receive magnitudes p_{1,} p₂, p₃, ..., pₙ measured in the vehicle 100 which correspond to said set of parameters. The evaluation module 310 is further configured to compare the measured magnitudes p₁, p₂, p₃, ..., pₙ with the set-point values p'₁, p'₂, p'₃, ..., p'ₙ and to assess on the basis thereof a current driving situation σ for the vehicle 100.

Deviations between the measured magnitudes and the set-point values are evaluated as regards both individual differences and various combinations of two or more magnitudes. The evaluation then serves as a basis for assessing the driving situation σ. Some examples of driving situations σ in which the driver may be regarded as needing assistance are skidding, middle axle shift, front vehicle shift, understeering and oversteering. Table 1 below exemplifies a set of magnitudes which according to an embodiment of the invention are used as a basis for determining a number of problematic driving situations.

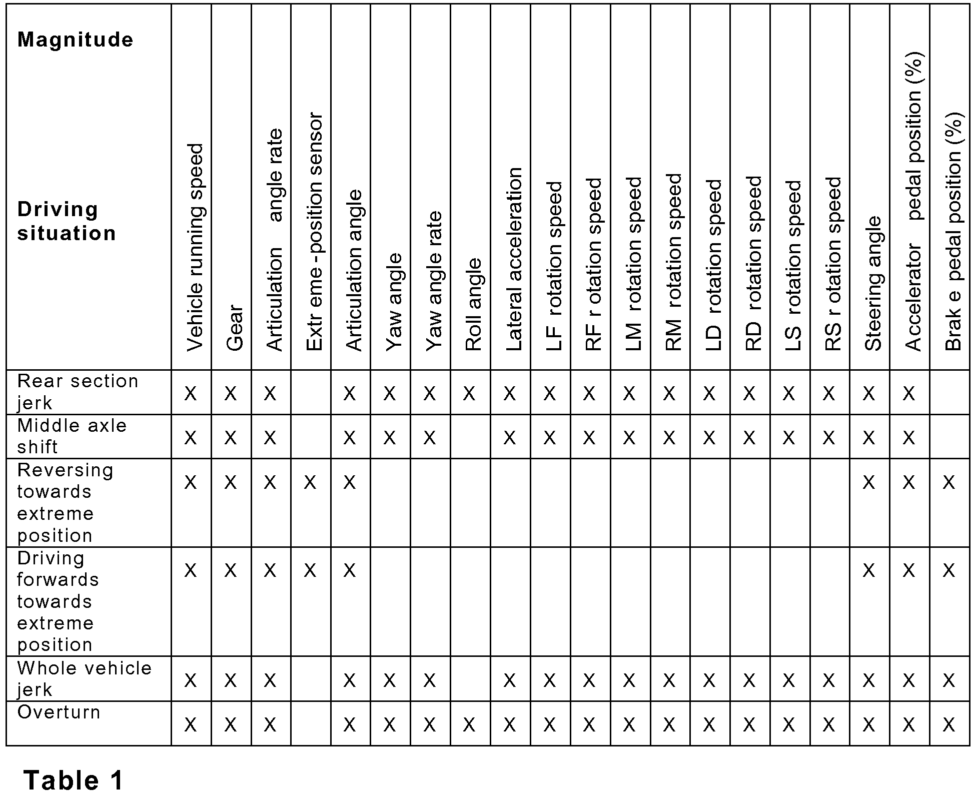

Provided that the driving situation σ assessed by the evaluation module 310 fulfils a handling criterion, the action module 330 is configured to generate at least control signal S_{action} adapted to causing at least one handling-related form of action intended to mitigate an undesired behaviour of the vehicle 100. If however the driving situation σ does *not* fulfil the handling criterion, no control signal S_{action} is generated.

According to an embodiment of the invention, the at least one handling-related form of action comprises: increasing the damping d_{C1} and/or d_{C2} of at least one of the respective elements 131 and 132; decreasing the damping d_{C1} and/or d_{C2} of at least one of the respective elements 131 and 132; braking at least one of the wheels LF, LM, LS, LD, RF, RM, RS and/or RD of the vehicle 100; and/or limiting at least one torque delivered to the powered wheels LD and RD of the vehicle 100. The possible feedback relationship between the control signal S_{action} and the damping d_{C1} and d_{C2} is illustrated in Figure 3 by broken lines. Table 2 below exemplifies forms of action which according to an embodiment of the invention are deemed applicable in the problematic driving situations indicated in Table 1.

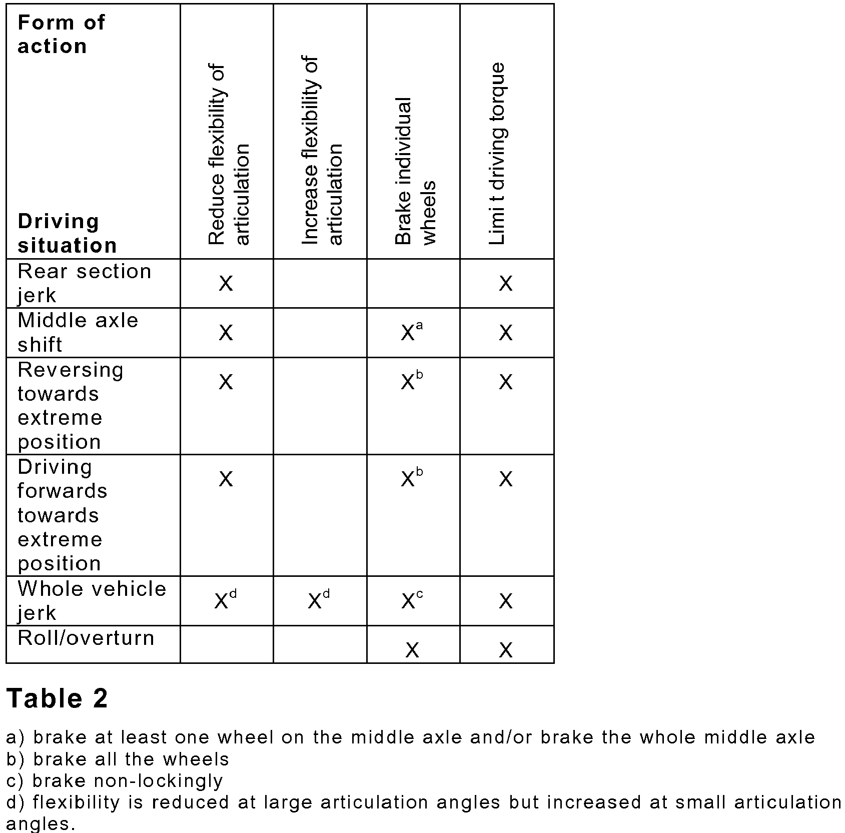

It is generally advantageous if the evaluation module 310, the calculation module 320 and/or the action module 330 are implemented by software executed in at least one processor 340. It is also preferred that two or all of the modules 310, 320 and 330 be implemented in a single processor 340. To this end it is advantageous if the system comprises, or is in some way associated with, a memory module 350 which comprises software for causing the system to effect the procedure described above.

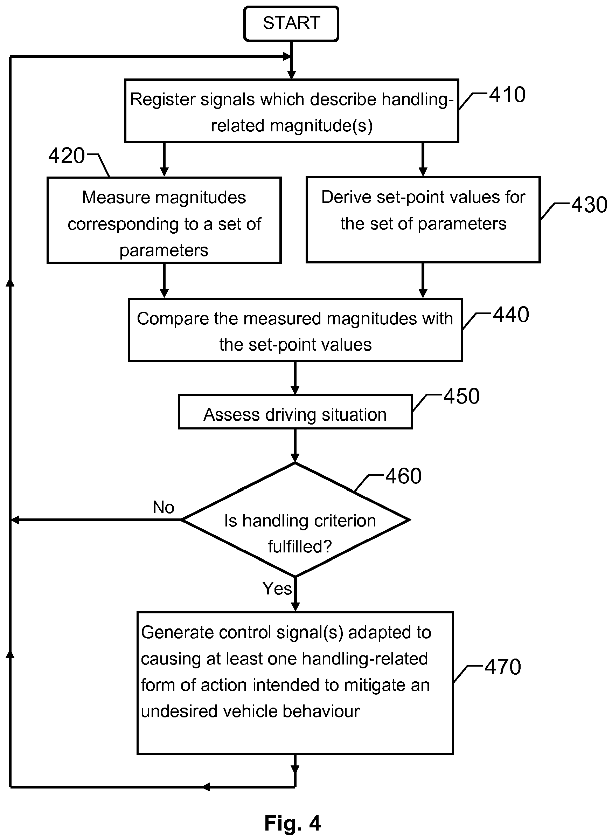

By way of summing up, the general method according to the invention for helping a driver to handle an articulated motor vehicle 100 is described below with reference to the flowchart in Figure 4.

A first step 410 registers signals which describe at least one handling-related magnitude for the vehicle. The signals may represent a steering angle for the vehicle, the vehicle's running speed and/or the magnitude of a damping of at least one element which is intended to influence the flexibility of an articulation between the vehicle's forward and rear sections.

A step 420 thereafter measures magnitudes corresponding to a set of parameters for the vehicle (e.g. articulation angle rate, articulation angle, yaw angle, yaw angle rate).

A step 430 (after step 410 and preferably parallel with step 420) uses the signals registered at step 410 as a basis for deriving set-point values for said set of parameters.

Thereafter a step 440 compares the magnitudes measured at step 420 with the set-point values according to step 430 and, on the basis of the result of comparison, assesses in a step 450 a current driving situation for the vehicle.

A subsequent step 460 examines whether the driving situation fulfils a handling criterion. If (but only if) such is the case, a step 470 follows, otherwise the procedure loops back to step 410 for repeated registering of the signals which describe the handling-related parameters.

Step 470 generates at least one control signal adapted to causing at least one handling-related form of action intended to mitigate an undesired behaviour of the vehicle. Thereafter the procedure loops back to step 410 for repeated registering of said signals.

The method steps described with reference to Figure 4 may be controlled by means of a programmed computer apparatus. In addition, although the embodiments of the invention which are described above with reference to the drawings comprise a computer and processes carried out in a computer, the invention extends to computer programmes, particularly computer programmes on or in a support adapted to practical implementation of the invention. The programme may be in the form of source code, object code, a code which is something between source and object code, e.g. in partly compiled form, or in any other form suitable for use in implementing the process according to the invention. The support may be any desired entity or device capable of carrying the programme. The support may for example comprise a storage medium such as a flash memory, an ROM (read only memory), e.g. a CD (compact disc) or a semiconductor ROM, EPROM (electrically programmable ROM), EEPROM (erasable EPROM), or a magnetic recording medium, e.g. a floppy disc or hard disc. The support may also be a transmitting support such as an electrical or optical signal which can be conveyed by an electrical or optical cable or via radio or in some other way. Where the programme takes the form of a signal which can be conveyed directly by a cable or other device or means, the support may take the form of such a cable, device or means. Alternatively the support may be an integrated circuit in which the programme is embedded, in which case the integrated circuit is adapted to carrying out, or being used in the carrying out of, the respective processes.

The invention is not limited to the embodiments described with reference to the drawings but may be varied freely within the scope of the claims set out below.

## Claims

1. A system for support with regard to handling a motor vehicle (100) comprising a forward vehicle section (110) and a rear vehicle section (120) which are connected to one another via a steerable articulation (130), wherein the articulation (130) has a rigidity being adjustable via at least one element (131, 132), which system comprises:
a set of sensors (M1, M2, M3, M4) configured to repeatedly register signals (α_{S}, v, d_{C1}, d_{C2}) which describe at least one handling-related magnitude for the vehicle (100), and
an evaluation module (310) configured to receive the signals (α_{S}, v, d_{C1}, d_{C2}) and to assess on the basis thereof a current driving situation for the vehicle (100),
wherein the system also comprises a calculation module (320) and an action module (330), such that
the calculation module (320) is configured to receive the signals (α_{S}, v, d_{C1}, d_{C2}) and to derive on the basis thereof respective set-point values (p'₁, p'₂, p'₃, ..., p'ₙ) for a set of parameters for the vehicle (100),
**characterised in that** the evaluation module (310) is configured to receive magnitudes (p₁, p₂, p₃, ..., pₙ) measured in the vehicle (100) which correspond to said set of parameters, to compare the measured magnitudes (p₁, p₂, p₃, ..., pₙ) with the set-point values (p'₁, p'₂, p'₃, ..., p'ₙ) and to assess on the basis thereof a current driving situation (σ) for the vehicle (100) comprising evaluation of deviations between the measured magnitudes and the set point values, and
the action module (330) is configured to, only when said driving situation (σ) fulfils a handling criterion and thus a problematic situation is determined, generate at least one control signal (S_{action}) adapted to causing at least one handling-related form of action intended to mitigate an undesired behaviour of the vehicle (100), wherein the at least one handling-related form of action comprises at least one from among:
increasing a damping (d_{C1}, d_{C2}) of at least one element (131, 132) which influences the flexibility of said articulation (130),
reducing a damping (d_{C1}, d_{C2}) of at least one element (131, 132) which influences the flexibility of said articulation (130),
braking at least one wheel (LF, LM, LS, LD, RF, RM, RS, RD) of the vehicle (100), and
limiting at least one torque delivered to the powered wheels (LD, RD) of the vehicle (100).

2. The system according to claim 1, in which the calculation module (320) is configured to derive said set-point values (p'₁, p'₂, p'₃, ..., p'ₙ) on the basis of a mathematical model for the vehicle (100) and by means of handling-related data for the specific vehicle.

3. The system according to either of claims 1 and 2, in which the signals (α_{S}, v, d_{C1}, d_{C2}) comprise at least one from among a steering angle (α_{S}) for the vehicle (100), the running speed (v) of the vehicle (100) and the magnitude of a damping (d_{C1}, d_{C2}) of at least one element (131, 132) which is adapted to influencing the flexibility of said articulation (130) between the forward and rear vehicle sections (110; 120).

4. The system according to any one of the foregoing claims, in which at least one from among the evaluation module (310), the calculation module (320) and the action module (330) is implemented by software which is executed in at least one processor (340).

5. The system according to claim 4, in which at least two modules from among the evaluation module (310), the calculation module (320) and the action module (330) are implemented in a single processor (340).

6. A support method with regard to handling a motor vehicle (100) comprising a forward vehicle section (110) and a rear vehicle section (120) which are connected to one another via a steerable articulation (130), wherein the articulation (130) has a rigidity being adjustable via at least one element (131, 132), which method comprises:
repeated registering of signals (α_{S}, v, d_{C1}, d_{C2}) which describe at least one handling-related magnitude for the vehicle (100), and
assessing a current driving situation for the vehicle (100) on the basis of the signals (α_{S}, v, d_{C1}, d_{C2}),
derivation of set-point values (p'₁, p'₂, p'₃, ..., p'ₙ) for a set of parameters for the vehicle (100) on the basis of the signals (α_{S}, v, d_{C1}, d_{C2}),
measurement of magnitudes (p₁, p₂, p₃, ..., pn) corresponding to said set of parameters,
the method being **characterised by** comprising:
comparison of the measured magnitudes (p₁, p₂, p₃, ..., pn) with the set-point values (p'₁, p'₂, p'₃, ..., p'ₙ), and, on the basis thereof,
assessment of a current driving situation (σ) for the vehicle (100) comprising evaluation of deviations between the measured magnitudes and the set-point values, and, only when said driving situation (σ) fulfils a handling criterion and thus a problematic situation is determined,
generation of at least one control signal (S_{action}) adapted to causing at least one handling-related form of action intended to mitigate an undesired behaviour of the vehicle (100), wherein the at least one handling-related form of action comprises at least one from among:
increasing a damping (d_{C1}, d_{C2}) of at least one element (131, 132) which influences the flexibility of said articulation (130),
reducing a damping (d_{C1}, d_{C2}) of at least one element (131, 132) which influences the flexibility of said articulation (130),
braking at least one wheel (LF, LM, LS, LD, RF, RM, RS, RD) of the vehicle (100), and
limiting at least one torque delivered to the powered wheels (LD, RD) of the vehicle (100).

7. The method according to claim 6, whereby said set-point values (p'₁, p'₂, p'₃, ..., p'ₙ) are derived on the basis of a mathematical model for the vehicle (100) and by means of handling-related data for the specific vehicle.

8. The method according to either of claims 6 and 7, whereby the signals (α_{S}, v, d_{C1}, d_{C2}) comprise at least one from among a steering angle (α_{S}) for the vehicle (100), the running speed (v) of the vehicle (100) and the magnitude of a damping (d_{C1}, d_{C2}) of at least one element (131, 132) which is adapted to influencing the flexibility of said articulation (130) between the forward and rear vehicle sections (110; 120).

9. A computer programme which is directly downloadable to the internal memory (350) of a computer and comprises software for performing the steps according to any one of claims 6 to 8 when said programme is run on a computer.

10. A computer-readable medium (350) which has stored upon it a programme which, when executed by a computer, enables the computer to perform the steps according to any one of claims 6 to 8.

## Patentansprüche

1. System zur Unterstützung der Handhabung eines Kraftfahrzeugs (100), das einen vorderen Fahrzeugabschnitt (110) und einen hinteren Fahrzeugabschnitt (120) aufweist, die über ein steuerbares Gelenk (130) miteinander verbunden sind, wobei das Gelenk (130) eine über mindestens ein Element (131, 132) einstellbare Steifigkeit hat, wobei das System aufweist:
einen Satz Sensoren (M1, M2, M3, M4), die zum wiederholten Registrieren von Signalen (αs, v, dc1, dc2) konfiguriert sind, die mindestens eine handhabungsbezogene Größe des Fahrzeugs (100) beschreiben, und
ein Evaluierungsmodul (310), das zum Empfangen der Signale (αs, v, dc1, dc2) und auf deren Basis zur Bewertung einer aktuellen Fahrsituation des Fahrzeugs (100) konfiguriert ist, wobei das System außerdem ein Berechnungsmodul (320) und ein Aktionsmodul (330) aufweist, wobei das Berechnungsmodul (320) zum Empfangen der Signale (αs, v, dc1, dc2) und auf deren Basis zum Ableiten entsprechender Sollwerte (p'1, p'2, p'3, ..., p'n) für einen Satz Parameter des Fahrzeugs (100) konfiguriert ist,
**dadurch gekennzeichnet, dass**
das Evaluierungsmodul (310) zum Empfangen von im Fahrzeug (100) gemessenen Größen (p1, p2, p3, ..., pn) konfiguriert ist, die dem Satz Parameter entsprechen, um die gemessenen Größen (p1, p2, p3, ..., pn) mit den Sollwerten (p'1, p'2, p'3, ..., p'n) zu vergleichen und auf deren Basis die aktuelle Fahrsituation (σ) des Fahrzeugs (100) zu bewerten, was die Evaluierung von Abweichungen zwischen den gemessenen Größen und den Sollwerten umfasst, und
das Aktionsmodul (330) konfiguriert ist, nur dann, wenn die Fahrsituation (σ) ein Handhabungskriterium erfüllt und damit eine problematische Situation bestimmt wird,
mindestens ein Steuersignals (Saction) zu erzeugen, das darauf eingestellt ist, mindestens eine handhabungsbezogene Aktionsform zu bewirken, die ein unerwünschtes Verhalten des Fahrzeugs (100) abmildern soll, wobei die mindestens eine handhabungsbezogene Aktionsform mindestens eine der folgenden Formen aufweist:
Erhöhen der Dämpfung (dc1, dc2) mindestens eines Elements (131, 132), das die Flexibilität des Gelenks (130) beeinflusst,
Verringern der Dämpfung (dc1, dc2) mindestens eines Elements (131, 132), das die Flexibilität des Gelenks (130) beeinflusst,
Bremsen mindestens eines Rades (LF, LM, LS, LD, RF, RM, RS, RD) des Fahrzeugs (100), und
Begrenzen mindestens eines an die angetriebenen Räder (LR, RD) des Fahrzeugs (100) gelieferten Drehmoments.

2. System nach Anspruch 1, wobei das Berechnungsmodul (320) zum Ableiten der Sollwerte (p'1, p'2, p'3, ..., p'n) auf Basis eines mathematischen Modells für das Fahrzeug (100) und mittels handhabungsbezogener Daten für das spezifische Fahrzeug konfiguriert ist.

3. System nach einem der Ansprüche 1 und 2, wobei die Signale (αs, v, dc1, dc2) mindestens entweder eines eines Lenkwinkels (αs) des Fahrzeugs (100), der Fahrgeschwindigkeit (v) des Fahrzeugs (100) und der Größe der Dämpfung (dc1, dc2) mindestens eines Elements (131, 132) aufweisen, das zur Beeinflussung der Flexibilität des Gelenks (130) zwischen dem vorderen und dem hinteren Fahrzeugabschnitt (110; 120) eingerichtet ist.

4. System nach einem der vorigen Ansprüche, wobei mindestens entweder das Evaluierungsmodul (310), das Berechnungsmodul (320) oder das Aktionsmodul (330) durch Software implementiert ist, die von mindestens einem Prozessor (340) ausgeführt wird.

5. System nach Anspruch 4, wobei mindestens zwei Module des Evaluierungsmoduls (310), des Berechnungsmoduls (320) oder des Aktionsmoduls (330) in einem einzelnen Prozessor (340) implementiert sind.

6. Unterstützungsverfahren bezüglich der Handhabung eines Kraftfahrzeugs (100), das einen vorderen Fahrzeugabschnitt (110) und einen hinteren Fahrzeugabschnitt (120) aufweist, die über ein steuerbares Gelenk (130) miteinander verbunden sind, wobei das Gelenk (130) eine über mindestens ein Element (131, 132) einstellbare Steifigkeit hat, wobei das Verfahren aufweist:
wiederholtes Registrieren von Signalen (αs, v, dc1, dc2), die mindestens eine handhabungsbezogene Größe des Fahrzeugs (100) beschreiben, und
Bewerten einer aktuellen Fahrsituation des Fahrzeugs (100) auf Basis der Signale (αs, v, dc1, dc2),
Ableiten von Sollwerten (p'1, p'2, p'3, ..., p'n) für einen Satz Parameter des Fahrzeugs (100) auf Basis der Signale (αs, v, dc1, dc2),
Messen der Größen (p1, p2, p3, ..., pn) entsprechend dem Satz Parametern, wobei das Verfahren **dadurch gekennzeichnet ist, dass** es aufweist:
Vergleichen der gemessenen Größen (p1, p2, p3, ..., pn) auf deren Basis mit den Sollwerten (p'1, p'2, p'3, ..., p'n) und,
Bewerten der aktuellen Fahrsituation (σ) des Fahrzeugs, was eine Evaluierung der Abweichungen zwischen den gemessenen Größen und den Sollwerten umfasst, und nur dann, wenn die Fahrsituation (σ) ein Handhabungskriterium erfüllt und damit eine problematische Situation bestimmt wird,
Erzeugen mindestens eines Steuersignals (Saction), das darauf eingestellt ist, mindestens eine handhabungsbezogene Aktionsform zu bewirken, die ein unerwünschtes Verhalten des Fahrzeugs (100) abmildern soll, wobei die mindestens eine handhabungsbezogene Aktionsform mindestens eine der folgenden Formen aufweist:
Erhöhen der Dämpfung (dc1, dc2) mindestens eines Elements (131, 132), das die Flexibilität des Gelenks (130) beeinflusst,
Verringern der Dämpfung (dc1, dc2) mindestens eines Elements (131, 132), das die Flexibilität des Gelenks (130) beeinflusst,
Bremsen mindestens eines Rades (LF, LM, LS, LD, RF, RM, RS, RD) des Fahrzeugs (100), und
Begrenzen mindestens eines an die angetriebenen Räder (LR, RD) des Fahrzeugs (100) gelieferten Drehmoments.

7. Verfahren nach Anspruch 6, wobei die Sollwerte (p'1, p'2, p'3, ..., p'n) auf Basis eines mathematischen Modells für das Fahrzeug (100) und mittels handhabungsbezogener Daten für das spezifische Fahrzeug abgeleitet werden.

8. Verfahren nach einem der Ansprüche 6 und 7, wobei die Signale (αs, v, dc1, dc2) mindestens entweder eines eines Lenkwinkels (αs) des Fahrzeugs (100), der Fahrgeschwindigkeit (v) des Fahrzeugs (100) und der Größe der Dämpfung (dc1, dc2) mindestens eines Elements (131, 132) aufweisen, das zur Beeinflussung der Flexibilität des Gelenks (130) zwischen dem vorderen und dem hinteren Fahrzeugabschnitt (110; 120) eingerichtet ist.

9. Computerprogramm, das direkt in den internen Speicher (350) eines Computers heruntergeladen werden kann und Software zum Ausführen der Schritte nach einem der Ansprüche 6 bis 8 aufweist, wenn das Programm auf dem Computer abläuft.

10. Computerlesbares Medium (350), auf dem ein Programm gespeichert ist, das es einem Computer bei Ausführung durch den Computer ermöglicht, die Schritte nach einem der Ansprüche 6 bis 8 auszuführen.

## Revendications

1. Système pour un soutien pour le maniement d'un véhicule à moteur (100) comprenant une partie avant du véhicule (110) et une partie arrière de véhicule (120) qui sont connectées l'une à l'autre via une articulation directionnelle (130), dans lequel l'articulation (130) a une rigidité étant réglable via au moins un élément (131, 132), lequel système comprend :
un ensemble de capteurs (M1, M2, M3, M4) configurés pour enregistrer de manière répétitive des signaux (αₛ, v, d_{C1}, d_{C2}) qui décrivent au moins une magnitude liée au maniement pour le véhicule (100), et
un module d'évaluation (310) configuré pour recevoir les signaux (αₛ, v, d_{C1}, d_{C2}) et pour évaluer sur la base de ces derniers une situation de conduite en cours pour le véhicule (100),
dans lequel le système comprend également un module de calcul (320) et un module d'action (330), de sorte que
le module de calcul (320) est configuré pour recevoir les signaux (αₛ, v, d_{C1}, d_{C2}) et pour tirer sur la base de ces derniers des valeurs de consigne respectives (p'₁, p'₂, p'₃,..., p'ₙ) pour un ensemble de paramètres pour le véhicule (100),
**caractérisé en ce que** le module d'évaluation (310) est configuré pour recevoir des magnitudes (p'₁, p'₂, p'₃,..., p'ₙ) mesurées dans le véhicule (100) qui correspondent audit ensemble de paramètres, pour comparer les magnitudes mesurées (p'₁, p'₂, p'₃, ..., p'ₙ) avec les valeurs de consigne (p'₁, p'₂, p'₃,..., p'ₙ) et pour évaluer sur la base de ces derniers une situation de conduite en cours (σ) pour le véhicule (100) comprenant l'évaluation d'écarts entre les magnitudes mesurées et les valeurs de consigne, et
le module d'action (330) est configuré, uniquement lorsque ladite situation de conduite (σ), pour remplir un critère de maniement et une situation problématique est ainsi déterminée, la génération d'au moins un signal de commande (S_{action}) adapté pour provoquer au moins une forme d'action liée au maniement destinée à atténuer un comportement non souhaité du véhicule (100), dans lequel l'au moins une forme d'action liée au maniement comprend au moins un parmi les éléments suivants :
l'augmentation d'un amortissement (d_{C1}, d_{C2}) d'au moins un élément (131, 132) qui influence la flexibilité de ladite articulation (130), la réduction d'un amortissement (d_{C1}, d_{C2}) d'au moins un élément (131, 132) qui influence la flexibilité de ladite articulation (130),
le freinage d'au moins une roue (LF, LM, LS, LD, RF, RM, RS, RD) du véhicule (100), et
la limitation d'au moins un couple fourni aux roues motrices (LD, RD) du véhicule (100).

2. Système selon la revendication 1, dans lequel le module de calcul (320) est configuré pour tirer lesdites valeurs de consigne (p'₁, p'₂, p'₃,..., p'ₙ) sur base d'un modèle mathématique pour le véhicule (100) et aux moyens de données liées au maniement pour le véhicule spécifique.

3. Système selon l'une ou l'autre des revendications 1 et 2, dans lequel les signaux (αₛ, v, d_{C1}, d_{C2}) comprennent au moins un parmi les éléments suivants : un angle de braquage (αₛ) pour le véhicule (100), la vitesse de marche (v) du véhicule (100) et la magnitude d'un amortissement (d_{C1}, d_{C2}) d'au moins un élément (131, 132) qui est adapté pour influencer la flexibilité de ladite articulation (130) entre les parties avant et arrière du véhicule (110 ; 120).

4. Système selon l'une quelconque des revendications précédentes, dans lequel au moins un parmi les éléments suivants : le module d'évaluation (310), le module de calcul (320) et le module d'action (330) est mis en oeuvre par un logiciel qui est exécuté dans au moins un processeur (340).

5. Système selon la revendication 4, dans lequel au moins deux modules parmi le module d'évaluation (310), le module de calcul (320) et le module d'action (330) sont mis en oeuvre dans un processeur unique (340).

6. Procédé de soutien pour le maniement d'un véhicule à moteur (100) comprenant une partie avant du véhicule (110) et une partie arrière de véhicule (120) qui sont connectées l'une à l'autre via une articulation directionnelle (130), dans lequel l'articulation (130) a une rigidité étant réglable via au moins un élément (131, 132), lequel procédé comprend :
l'enregistrement répété des signaux (αₛ, v, d_{C1}, d_{C2}) qui décrivent au moins une magnitude liée au maniement pour le véhicule (100), et
l'évaluation d'une situation de conduite en cours pour le véhicule (100) sur base des signaux (αₛ, v, d_{C1}, d_{C2}),
l'obtention de valeurs de consigne (p'₁, p'₂, p'₃,..., p'ₙ) pour un ensemble 10 de paramètres pour le véhicule (100) sur base des signaux (αₛ, v, d_{C1}, d_{C2}),
la mesure de magnitudes (p'₁, p'₂, p'₃,..., p'ₙ) correspondant audit ensemble de paramètres, le procédé étant **caractérisé par le fait qu'**il comprenne :
la comparaison des magnitudes mesurées (p'₁, p'₂, p'₃,..., p'ₙ) avec les valeurs de consigne (p'₁, p'₂, p'₃,..., p'ₙ), et, sur la base de celles-ci,
l'évaluation d'une situation de conduite en cours (σ) pour le véhicule (100) comprenant une évaluation d'écarts entre les magnitudes mesurées et les valeurs de consigne, et, uniquement lorsque ladite situation de conduite (σ) remplit un critère de maniement et ainsi une situation problématique est déterminée,
la génération d'au moins un signal de commande (S_{action}) adapté pour provoquer au moins une forme d'action liée au maniement destinée à atténuer un comportement non souhaité du véhicule (100), dans lequel l'au moins une forme d'action liée au maniement comprend au moins un parmi les éléments suivants
l'augmentation d'un amortissement (d_{C1}, d_{C2}) d'au moins un élément (131, 132) qui influence la flexibilité de ladite articulation (130),
la réduction d'un amortissement (d_{C1}, d_{C2}) d'au moins un élément (131, 132) qui influence la flexibilité de ladite articulation (130),
le freinage d'au moins une roue (LF, LM, LS, LD, RF, RM, RS, RD) du véhicule (100), et
la limitation d'au moins un couple fourni aux roues motrices (LD, RD) du véhicule (100).

7. Procédé selon la revendication 6, dans lequel lesdites valeurs de consigne (p'₁, p'₂, p'₃,..., p'ₙ) sont tirées sur base d'un modèle mathématique pour le véhicule (100) et aux moyens de données liées au maniement pour le véhicule spécifique.

8. Procédé selon l'une ou l'autre des revendications 6 et 7, dans lequel les signaux (αₛ, v, d_{C1}, d_{C2}) comprennent au moins un parmi les éléments suivants : un angle de braquage (αₛ) pour le véhicule (100), la vitesse de marche (v) du véhicule (100) et la magnitude d'un amortissement (d_{C1}, d_{C2}) d'au moins un élément (131, 132) qui est adapté pour influencer la flexibilité de ladite articulation (130) entre les parties avant et arrière du véhicule (110 ; 120).

9. Programme informatique qui est directement téléchargeable sur la mémoire interne (350) d'un ordinateur et comprend un logiciel pour réaliser les étapes selon l'une quelconque des revendications 6 à 8, lorsque ledit programme est exécuté sur un ordinateur.

10. Support lisible par ordinateur (350) qui a stocké sur celui-ci un programme qui, lorsqu'il est exécuté par un ordinateur, permet à l'ordinateur d'effectuer les étapes selon l'une quelconque des revendications 6 à 8.
